# EUROPEAN PATENT APPLICATION

(11) **EP 4 495 717 A1**
(43) Date of publication of application: **22.01.2025**
(21) Application number: 23210202.0
(22) Date of filing: 15.11.2023
(51) Int. Cl.: G05B 15/02, G07C 9/00

(54) **METHOD FOR TESTING A TECHNICAL BUILDING EQUIPMENT AND/OR AN ACCESS GATE OF A BUILDING, AND SYSTEM FOR CARRYING OUT THE METHOD**

(30) Priority: 21.07.2023 EP 23186925
(71) Applicant: dormakaba Schweiz AG, 8623 Wetzikon (CH)
(72) Inventor: FISCHER, Daniel, 8153 Rümlang (CH); MICHEL, François, 3963 Crans-Montana (CH)
(74) Representative: Balder IP Law, S.L.

(57) **Abstract**

The invention concerns a method (100) for testing a technical building equipment, hereinafter referred to as TBE (3), and/or an access gate (51) of a building, the method comprising: performing (101) a test of the TBE (3) and/or the access gate (51) by an authorized service person, hereinafter referred to as ASP (50), detecting (102), by detecting means, presence of the ASP (50) in the proximity of the TBE (3) and/or access gate (51) by determining the position of a mobile ASP-device (6) to be carried by the ASP (50),handing over (103), in particular sending, a presence information to a test protocol verification unit (8), when presence of the ASP (50) is detected in the proximity of the TBE (3) and/or access gate (51).

## Description

The invention concerns a method for testing a technical building equipment and/or an access gate of a building. Further, the invention concerns a system for carrying out the method.

In buildings, many different types of access gates, e.g. doors, are used, each of which must fulfill certain functions. For example, the access gates must open an escape route if necessary or may only allow certain groups of people to enter. The functions of the access gates but also the functions of many other technical building equipment must be checked regularly to maintain the safety and functionality of the entire building.

Therefore, it is an object of the present invention to provide a method and an associated system that enable safe operation of a building; in particular, reliably provide escape routes and maintain access restrictions.

The object is solved by the features of the independent claims. The dependent claims provide advantages embodiments of the invention.

Therefore, the object is solved by a method for testing a technical building equipment (TBE) of a building and/or for testing an access gate of the building. The TBE can be preferably: an access gate entity (AGE), and/or any elements for escape route control (including escape route signaling, such as lighting of an escape route), and/or alarm and communication systems, and/or fire extinguishing systems, and/or smoke extraction systems.

The term "TBE of a building" or "access gate of a building" is to be understood broadly and describes preferably the positioning of TBEs or access gates in buildings as well in enclosures, for example in fences or walls.

The AGE, as an example for the TBE, controls at least one access gate, in particular a door, a gate, a turnstile, or another barrier. The AGE may comprise one or more of following components that influence the behavior of the access gate and that can be tested:
AGE can comprise an AGE controller, which preferably represents the main electronic component of the AGE. At least the further components described in the following can be connected to the AGE controller. The AGE controller can control these components and/or receive data from these components. The AGE controller is preferably connected to a server via the data link for data exchange. This can be done wireless or by cable.
AGE can comprise an emergency open button, which is preferably designed to unlock an access gate of the AGE in case of emergency.
AGE can comprise a touch display configured for password and/or gesture code input, preferably in order to permit the person knowing the password/gesture to lock and/or unlock the access gate of the AGE.
AGE can comprise means for biometrical identification, preferably in order to identify a user or user group and in order to permit locking and/or unlocking of the access gate of the AGE. Preferably, the means for biometrical identification comprise a camera adapted for facial recognition and/or a fingerprint sensor.
AGE can comprise an electronic-key reader, preferably in order to permit the owner of the electronic-key to lock and/or unlock the access gate of the AGE.
AGE can comprise a mechanical key operated switch (=switch operated by mechanical key), preferably in order to permit the owner of the mechanical key to lock and/or unlock the access gate of the AGE.
AGE can comprise a keypad configured for password input, preferably in order to permit the person knowing the password to lock and/or unlock the access gate of the AGE.
AGE can comprise a door lock, which is preferably electrically operable to unlock and/or lock the access gate.
AGE can comprise a door buzzer, which is preferably electrically operable to unlock and/or lock the access gate.
AGE can comprise a door closer (can also be referred to as access gate closer), which is designed to close a manually opened access gate. The door closer preferably comprises a hold-open function which can be controlled electrically and/or electronically and which may be tested. Additionally or alternatively, the door closer may comprise a sensor that measures the access gate angle so that the position of the access gate can be detected.
AGE can comprise a door drive (can also be referred to as access gate drive). The door drive can open and/or close the access gate automatically. Preferably, the door drive is electrically controllable.

The AGE can comprise a fire detector. The detector can send appropriate signals and/or respond to signals.

The method comprises the step of performing a test of the TBE and/or a test of the access gate. The access gate is preferably controlled by the TBE, in particular AGE. The test(s) is/are performed by an authorized service person, hereinafter referred to as ASP. During the test, one component or several components of the TBE and/or the access gate can be tested. For example, a door closer can be tested, which ensures that an access gate is always closed for fire protection. Further, for example, an emergency open button can be tested to ensure that an access gate can be unlocked in an emergency. Furthermore, it is preferably provided that the access gate itself is checked; e.g. it can be checked that an access gate is not blocked/wedged. Furthermore, emergency lighting of an escape route or the illumination of an escape route information sign can be tested, for example.

Further, the method comprises the step of detecting by detecting means presence of the ASP in the proximity of the tested TBE (or the TBE to be tested) and/or in the proximity of the tested access gate (or the access gate to be tested) by determine the position of a mobile ASP-device to be carried by the ASP. Preferably, the position of the mobile ASP-device is determined by using the detecting means. As soon as a particular ASP-device is in the proximity of the TBE and/or in the proximity of the access gate 51, it is assumed that the ASP is also in the proximity. For the inventive method, it is preferably intended that the ASP-device is not only "to be carried" by the ASP, but is actually carried by the ASP during the method is performed.

The ASP-device can be a mobile device that is specially designed for performing service work and/or testing to the TBE. Preferably, however, the ASP-device is a commercially available smartphone, tablet or laptop that is equipped with appropriate software for the application described herein. However, the ASP-devise can also be just an electronically or mechanically readable passive element, such as an RFID chip or a QR code or a mechanical key. The RFID chip or QR code can be part of a key card, for example.

The two steps "performing a test" and "detecting presence" do not have to take place consecutively, but can take place in any order or simultaneously. In particular, it is intended that "detecting presence" takes place immediately before and/or during and/or immediately after "performing a test". Preferably, "immediately before" means at any time of the same day before the test begins, preferably in the 60 minutes, especially 30 minutes, especially 5 minutes, before the test begins. Preferably, "immediately after" means at any time of the same day after the test ends, preferably in the 60 minutes, especially 30 minutes, especially 5 minutes, after the test ends.

The method further comprises the step of handing over, preferably sending, a presence information, when presence of the ASP is detected in the proximity of the TBE or in the proximity of the access gate, wherein the presence information is handed over from the detecting means to a test protocol verification unit.

In a simple case, the presence information contains only information about the fact that the presence of ASP has taken place, e.g. a data set with the information content YES/NO. However, the presence information can also contain even more information, as will be explained later.

The test protocol verification unit preferably includes software and preferably hardware on which the software runs. The hardware may be a common computer, mobile phone, tablet, or server. The test protocol verification unit is preferably at least adapted to receive and store the presence information.

It is preferably stored in the test protocol verification unit that an ASP was present at the TBE and/or access gate at a certain point in time. The ASP performing the test at the TBE and/or at the access gate protocols this test - in analog or digital form. In this way, it is possible to check afterwards, by querying the data at the test protocol verification unit, whether the AGE was actually present during the protocolled test. This can ensure safe operation of the building.

Preferably, the method comprises that the ASP generates a test protocol for the test of the TBE and/or access gate by data input at a test protocol unit. The test protocol unit includes preferably software and preferably hardware on which the software runs. The hardware may be a common computer, mobile phone, tablet, or server.

The test protocol unit is preferably at least adapted to receive the input and to generate the protocol. The protocol preferably includes at least the information that the test has been performed. Preferably, however, the protocol is more detailed and includes, for example, the type of test, the result of the test, and/or the location of the test, etc. Much of this information may already be pre-filled and therefore need not necessarily be imputed/entered by the ASP.

Preferably the test protocol unit is implemented in the ASP-device, e.g. as an app on the mobile phone. Or the test protocol unit is server-implemented and operable via a user device. This user device can be the ASP-device.

Server-implemented means that the software of the test protocol unit runs completely or partially on a server. The hardware of the server can represent the hardware of the test protocol unit completely or partially. The Server for implementing the test protocol unit can be located in the same building as the TBE or access gate. However, the server can also be located partially or completely outside the building and connected to the user device, e.g. via the internet. The server can be implemented as a virtual server and/or via a cloud solution. The data link between the user device and the server can be completely wired, can be completely wireless, or can be partially wired and partially wireless.

Preferably, the test protocol is transferred to the test protocol verification unit. Thus, by means of a data query at the test protocol verification unit, not only the presence information but also the test protocol can be checked.

Preferably, the method comprises that the test protocol verification unit links the presence information to the test protocol, in particular in a tamper-proof manner. This means preferably that the presence information and the test protocol are permanently linked, making subsequent manipulation difficult.

Preferably, the method comprises that the test protocol verification unit provides the presence information with a time stamp, in particular in a tamper-proof manner. In this way, the presence information can be subsequently assigned to the test protocol, provided that the test protocol also contains time information.

Preferably, the method comprises that the test protocol verification unit links the presence information to a dataset, in particular in a tamper-proof manner, wherein the dataset is related to the performed test and/or the test protocol.

In the above variants, the type/mode for the "tamper-proof manner" can be selected depending on the specific safety requirements.

Preferably, the test protocol verification unit is server-implemented. Server-implemented means that the software of the test protocol verification unit runs completely or partially on a server. This can be the same server that is used for the test protocol unit or a different server. The hardware of the server can represent the hardware of the test protocol verification unit completely or partially. The Server for implementing the test protocol verification unit can be located in the same building as the TBE or access gate. However, the server can also be located partially or completely outside the building and connected to the detecting means, e.g. via the internet. The server can be implemented as a virtual server and/or via a cloud solution. The data link between the detecting means and the server can be completely wired, can be completely wireless, or can be partially wired and partially wireless.

Alternatively preferred, it is provided that the test protocol verification unit is implemented in the ASP-device. The test protocol unit and the test protocol verification unit can also share the same hardware. The test protocol unit and the test protocol verification unit can even be components of the same app. If the presence information is generated in the ASP-device, the presence information can be handed over within the ASP-device from one software section that is responsible for generating the presence information to another software section that represents the test protocol verification unit. If the presence information is generated in the TBE, the presence information can be sent from the TBE to the ASP-device and thus to the test protocol verification unit.

Preferably, the step(s) of detecting and/or handing over is/are performed automatically, when presence of the ASP is detected in the proximity of the TBE or access gate. The generation and handover of the presence information is a relatively simple process with small amounts of data, which is why these method steps can be carried out regularly, even without a pending test. In an alternative preferred variant, it is provided that the step(s) of detecting and/or handing over is/are triggered by the ASP starting the test or generating the test protocol. E.g. the steps can be triggered by the ASP-device when the ASP starts with the test protocol at the ASP-device.

There are multiple preferred methods for determining the position of the ASP-device. More than one of the methods may be used, for example, to perform the determination more precisely and/or to validate the determination performed with one method with another method. Preferably, at least one of the following methods are provided:
(i) Preferably, the position of the ASP-device is determined by checking if the ASP-device is reachable within a wireless local network, preferably reachable by a particular access point of the wireless local network and/or reachable with a certain RSSI-value. Thus, it may be sufficient for verification of the test protocol that the ASP-device is reachable in a certain wireless local network. However, in order to determine the exact position, thus ensuring that the ASP is as close as possible to the TBE or access gate, it may be provided that the ASP is only considered to be present if the ASP-device is reachable at a certain access point of the wireless local network and/or if the ASP-device is reachable with a certain RSSI-value. The wireless local network is in particular a Wi-Fi network or Bluetooth network. RSSI stands for signal strength indicator; the higher this value, the more likely it is that the ASP-device is closer to the access point.
(ii) Preferably, the position of the ASP-device is determined by an indoor positioning system, preferably based on indoor-GPS, more preferably based on triangulation, more preferably based on ultra-wideband ranging.
(iii) Preferably, the position of the ASP-device is determined by a satellite navigation system, such as GPS or Galileo. For example, if the TBE is located at a gate of a fence or wall - i.e. outdoors - the position determination by means of satellite navigation system may be sufficient to meet certain security requirements. Furthermore, it may be sufficient - even for TBEs or access gates inside buildings - if it is detected that the ASP is located in or at the building, wherein a satellite navigation system can be sufficient for this purpose.

For the following methods of determining the position of the ASP-device preferably a data link between the ASP-device and the test protocol verification unit and/or between the ASP-device and a server is/are provided:
(iv) Preferably, the positon of the ASP-device is determined by reading a tag, preferably QR code or RFID chip, provided in the proximity of the TBE or access gate with the ASP-device, and handing over information corresponding to the tag as presence information from the ASP-device, optionally via a server, to the test protocol verification unit. In "the proximity of the TBE or access gate" means that the tag can be at the TBE/access gate or close to the TBE/access gate. Depending on the security requirement, it may also be sufficient to check whether the ASP is in the building, which is why "the proximity of the TBE or access gate" preferably includes that the tag is in or at the same building.

For example, the tag contains a number that is compared with stored data to determine that the ASP-device is on a certain position close to the tag. This comparison of the tag number with stored data can preferably take place in the ASP-device, or in a server, or in the test protocol verification unit. If the tag number is compared with the stored data in the ASP-device or in the server, the "information corresponding to the tag" transferred to test protocol verification unit may already contain detailed information about the location of the tag. If, on the other hand, the comparison is to take place in the test protocol verification unit, the "information corresponding to the tag" contains the tag number; the test protocol verification unit can compare the tag number with stored data in order to determine to which location the tag number belongs.
(v) Preferably, the positon of the ASP-device is determined by recording the environment of the TBE or access gate with a camera of the ASP-device.

Thereby, in the ASP-device and/or in a server and/or in the test protocol verification unit the recorded environment is compared with stored data in order to identify the location.

For the following method of determining the position of the ASP-device preferably a data link between a reader, which preferably can be the tested TBE or any other TBE, and the test protocol verification unit - directly or via a server - is provided:
(vi) As already mentioned, the ASP-devise can be an electronically or mechanically readable passive element, such as an RFID chip or a QR code or a mechanical key. The RFID chip or QR code can be part of a key card, for example. However, such RFID chip can also be integrated in an other device, e.g. smart phone. And such QR code can also be displayed by an other device, e.g. smart phone.

The above mentioned reader can read the ASP-device and can hand over information corresponding to the reader and/or ASP-device as part of the presence information to the test protocol verification unit, directly or via a server.

Preferably, the TBE can comprise as "reader" an electronic-key reader. The same electronic-key reader can be used in order to permit the owner of an electronic-key to lock and/or unlock an access gate controlled by the TBE during normal use (not during the test). For example, the reader reads an ID number from the ASP-device (e.g. from the RFID chip or QR code) and sends the ID number together with an identifier of the reader to the test protocol verification unit. The test protocol verification unit can compare the ID number and the identifier of the reader in order to determine the location of the reader and the permission of the ID number. This procedure can also take place partially or completely in a server between reader and test protocol verification unit.

Preferably, the TBE can comprise as "reader" a mechanical key operated switch (=switch operated by mechanical key). The switch can be used to trigger the sending of the presence information. For example, if the switch is operated with the correct mechanical key, the switch can send a simple analog signal or a data packet as "information corresponding to the reader". In the server or in the test protocol verification unit, the "information corresponding to the reader" can be evaluated, in particular compared with stored data, to determine the location of the switch.

The same mechanical key operated switch can be used in order to permit the owner of a mechanical key to lock and/or unlock the access gate controlled by the TBE during normal use (not during the test).

In general, and for all variants described above, the presence information may include the following information:
Preferably, the presence information contains information about the kind of the TBE (in which proximity the presence was detected), especially about the kind of the individual components of the TBE or access gate.
Preferably, the presence information contains information about the location of the TBE or access gate, in which proximity the presence was detected.
Preferably, the presence information contains information about the identity of the ASP-device, which position was determined; for example, an ID number of the ASP-device.
Preferably, the presence information contains information about the time of presence of the ASP.
Preferably, the presence information contains information about the identity of the ASP. This does not necessarily mean that the actual person can be identified: "Identity of the ASP" also includes the information that the ASP - no matter which actual person - belongs to a certain group, especially with a certain trust level.
Preferably, the method requires that the ASP identify herself/himself to the ASP-device in order: (i) to add an information related to the identity of the ASP-device, and/or the time of presence of the ASP, and/or the identity of the ASP, to the presence information, (ii) and/or to permit the determination of the position of the ASP-device.

This identification can also be done by the ASP logging into the ASP-device or into the appropriate app/software running on the ASP-device.

Preferably, identification at the ASP-device can be done by a password and/or gesture code and/or at least one biometric identification method, preferably fingerprint scanning and/or facial recognition.

Preferably, the presence of two ASP can be detected in particular by determine the position of two ASP-devices and/or by identifying the two ASPs themselves at one ASP-device which position is determined. The presence information preferably contains information about the presence of both ASPs.

As already described, the method according to present invention comprises the step of detecting, by detecting means, presence of the ASP in the proximity of the TBE or access gate. This can be done by determine the position of the ASP-device. Additionally or alternatively, it is also provided that the presence of the ASP is detected by identifying the ASP at any TBE, in particular by biometrical identification. The biometric identification can be done by any means on or in the proximity of the TBE, for example a fingerprint reader or a camera for facial recognition.

Preferably, the TBE at which identification takes place is the one which is tested.

In combination with the use of the ASP-device, this additional method, namely the identification at the TBE , can be used for checking (validating) whether the determination of the position by means of the ASP-device is correct and/or to further specifying the determination of the position.

Preferably, the invention comprises a system adapted to carry out the method according to any of the options described herein and/or defined in the claims. All of the optional features described for the method in description or claims are also preferably used within the device, namely the system.

The system comprising:
(i) the test protocol verification unit adapted to receive the presence information, (ii) the TBE and/or the access gate adapted to be tested by the ASP, (iii) and the detecting means adapted to detect presence of the ASP in the proximity of the TBE or access gate by determine the position of the mobile ASP-device to be carried by the ASP, (iv) wherein the detecting means are adapted to hand over, preferably to send, the presence information to the test protocol verification unit, when presence of the ASP is detected in the proximity of the TBE or access gate.

The detecting means may be formed by a single device or by a set of different devices, depending on the method used for detecting the presence of the ASP. For example, the detecting means can be formed as follows:
(i) Preferably, the detecting means are adapted to determine the position of the ASP-device by checking if the ASP-device is reachable within a wireless local network, preferably reachable by a particular access point of the wireless local network and/or reachable with a certain RSSI-value. The processing or interpretation of the data of the wireless local network can be done in a server or in another computing unit, which represents the detecting means.
(ii) Preferably, the detecting means are adapted to determine the position of the ASP-device by an indoor positioning system, preferably based on indoor-GPS, more preferably based on triangulation, more preferably based on ultra-wideband ranging. The processing or interpretation of the data of the indoor positioning system can be done in a server or in another computing unit, which represents the detecting means.
(iii) Preferably, the detecting means are adapted to determine the position of the ASP-device by a satellite navigation system, such as GPS or Galileo. The processing or interpretation of the data of the satellite navigation system can be done in a server or in another computing unit, which represents the detecting means.
(iv) Preferably, the detecting means are adapted to determine the positon of the ASP-device by reading a tag, preferably QR code or RFID chip, provided in the proximity of the TBE or access gate with the ASP-device, and handing over corresponding information as presence information from the ASP-device to the test protocol verification unit. Thereby, the ASP-device can represent a part of the detecting means.
(v) Preferably, the detecting means are adapted to determine the positon of the ASP-device by recording the environment of the TBE or access gate with a camera of the ASP-device. Thereby, the ASP-device can represent a part of the detecting means. And as the processing or interpretation of the recorded environment can take place in a server, this server can also represent a part of the detecting means.
(vi) Preferably, the detecting means are adapted to determine the positon of the ASP-device by reading the ASP-device in the proximity of the TBE or access gate with a reader, and handing over information corresponding to the reader and/or to the ASP-device as part of the presence information from the reader to the test protocol verification unit. Thereby, the reader can represent a part of the detecting means.

The following describes the invention in more detail with reference to an embodiment.
Fig. 1 shows steps of the inventive method in accordance with an embodiment, and
Fig. 2 shows a schematic view for explaining the inventive method in accordance with the embodiment and for illustrating the inventive system, configured for carrying out the inventive method, in accordance with the embodiment.

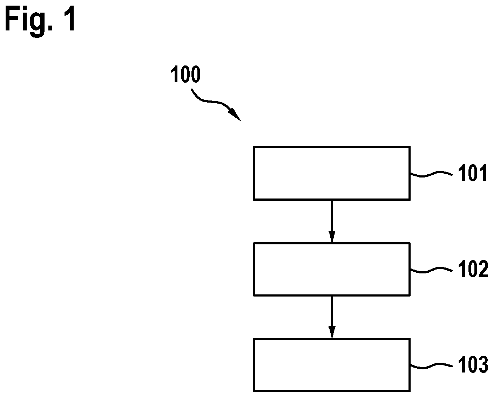

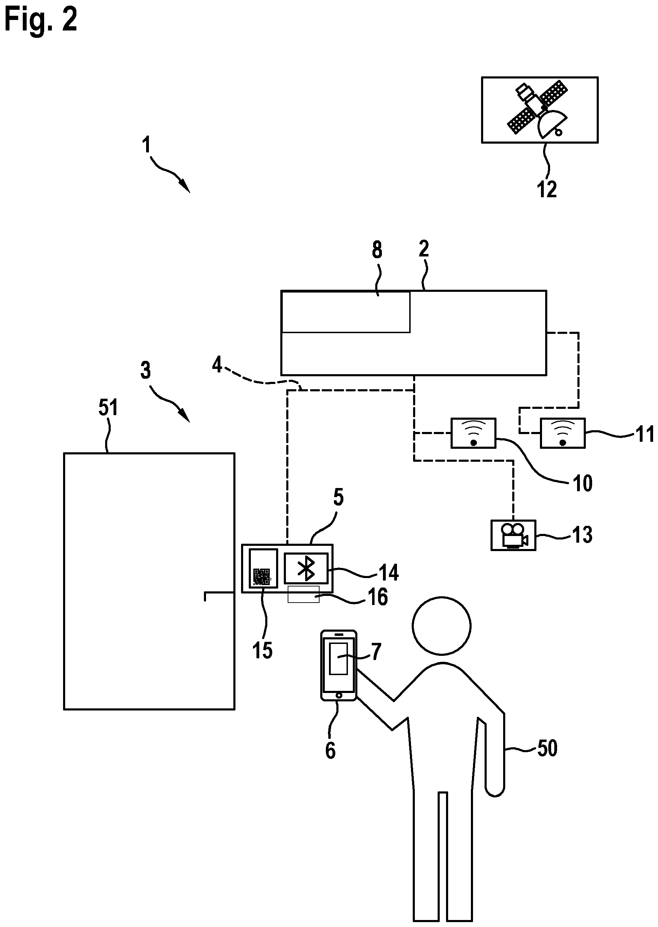

According to Fig. 1, the invention discloses a method 100 for testing a TBE 3 (see Fig. 2), which is an access gate entity (AGE) according to the embodiment, and/or for testing an access gate 51 (see Fig. 2) of a building. Fig. 2 shows a system 1 for carrying out the method 100. All explanations, optional features and other characteristics described above, in particular in the general part of the description, as well as the features described in the claims apply in particular to the embodiment - with regard to the method 100 and the system 1.

According to Fig. 1, the method 100 comprising following steps:
Step 101: performing a test of the TBE 3 and/or to the access gate 51by an authorized service person, hereinafter referred to as ASP 50.
Step 102: detecting, by detecting means, presence of the ASP 50 in the proximity of the TBE 3 or access gate 51 by determine the position of a mobile ASP-device 6 to be carried by the ASP 50.
Step 103: handing over 103, in particular sending, a presence information, when presence of the ASP 50 is detected in the proximity of the TBE 3 or access gate 51, wherein the presence information is handed over from the detecting means to a test protocol verification unit 8.

The system 1 in Fig. 2 comprising: The test protocol verification unit 8 adapted to receive the presence information, the TBE 3 and/or the access gate 51 adapted to be tested by the ASP 50, and the detecting means adapted to detect presence of the ASP 50 in the proximity of the TBE 3 by determine the position of the mobile ASP-device 6 to be carried by the ASP 50, wherein the detecting means are adapted to hand over, preferably send, the presence information to the test protocol verification unit 8, when presence of the ASP 50 is detected in the proximity of the TBE 3.

According to the embodiment, ASP 50 generates a test protocol for the test of the TBE 3 or access gate 51 by input at a test protocol unit 7.

According to the embodiment, the test protocol unit 7 is implemented in the ASP-device 6. According to an alternative, which is not shown for the sake of simplicity, the test protocol unit 7 is server-implemented and operable via a user device, preferably the ASP-device 6.

According to the embodiment, the test protocol is transferred to the test protocol verification unit 8.

According to the embodiment, the test protocol verification unit 8 can be set to link the presence information to the test protocol, in particular in a tamper-proof manner, and/or to provide the presence information with a time stamp, in particular in a tamper-proof manner, and/or to link the presence information to a dataset, in particular in a tamper-proof manner, wherein the dataset is related to the performed test and/or the test protocol.

According to the embodiment, the test protocol verification unit 8 is server-implemented; e.g. in a server 2. According to an alternative, which is not shown for the sake of simplicity, the test protocol verification unit 8 is implemented in the ASP-device 6.

According to an embodiment, the system 1 can be set to perform automatically the steps of detecting presence 102 and/or handing over the presence information 103, when presence of the ASP 50 is detected in the proximity of the TBE 3, or can be set to perform the steps of detecting presence 102 and/or handing over the presence information 103 when triggered by the ASP 50 starting the test or generating the test protocol.
(i) The detecting means of the embodiment can be adapted to determine the position of the ASP-device 6 by checking if the ASP-device 6 is reachable within a wireless local network 10, 14, which can be a wireless local Wi-Fi network 10 or wireless local Bluetooth network 14. The processing or interpretation of the data of the wireless local network 10, 14 can be done in the server 2 or in another computing unit, which represents the detecting means.
(ii) The detecting means of the embodiment can be adapted to determine the position of the ASP-device 6 by an indoor positioning system 11, preferably based on indoor-GPS, more preferably based on triangulation, more preferably based on ultra-wideband ranging. The processing or interpretation of the data of the indoor positioning 11 system can be done in the server 2 or in another computing unit, which represents the detecting means.
(iii) The detecting means of the embodiment can be adapted to determine the position of the ASP-device 6 by a satellite navigation system 12, such as GPS or Galileo. The processing or interpretation of the data of the satellite navigation system 12 can be done in the server 2 or in another computing unit, which represents the detecting means.
(iv) The detecting means of the embodiment can be adapted to determine the positon of the ASP-device 6 by reading a tag 15, preferably QR code or RFID chip, provided in the proximity of the TBE 3 or access gate 51 with the ASP-device 6, and sending information corresponding to the tag as presence information from the ASP-device 6 to test protocol verification unit 8. Thereby, the ASP-device 6 can represent a part of the detecting means.
(v) The detecting means of the embodiment can be adapted to determine the positon of the ASP-device 6 by recording the environment of the TBE 3 or access gate 51 with a camera of the ASP-device 6. Thereby, the ASP-device 6 can represent a part of the detecting means. And as the processing or interpretation of the recorded environment can take place in the server 2, the server 2 can also represent a part of the detecting means.
(vi) Preferably, the detecting means of the embodiment are adapted to determine the positon of the ASP-device 6 by reading the ASP-device 6 in the proximity of the TBE 3 or access gate 51 with a reader 16, and handing over information corresponding to the reader and/or the ASP-device 6 as part of the presence information from the reader 16 to the test protocol verification unit 8. Thereby, the reader 16 can represent a part of the detecting means. The reader 16 can be for example part of the TBE 3 as shown in Fig. 2

According to the embodiment, the presence information can contain information about the kind of the TBE 3, and/or the location of the TBE 3, and/or the identity of the ASP-device 6, and/or the time of presence of the ASP 50, and/or the identity of the ASP 50.

According to the embodiment, the system 1 and method 100 can be set, so that the ASP 50 is required to identify herself/himself to the ASP-device 6 in order to add an information related to the identity of the ASP-device 6, and/or the time of presence of the ASP 50, and/or the identity of the ASP 50, to the presence information, and/or to permit the determination of the position of the ASP-device 6.

According to the embodiment, the system 1 and method 100 can be set, so that the presence of two ASPs 50 is detected by the detecting means and the handed over presence information contains information about both present ASPs; in particular, wherein the position of two ASP-devices 6 is determined and/or the two ASPs 50 identify themselves at one ASP-device 6 which position is determined.

The schematic drawing in Fig. 2 also shows the possibility that the presence of the ASP 50 is detected 102 by identifying the ASP 50 at the TBE 3 - in the embodiment at an access gate entity which access gate 51 is tested. Thereby a biometrical identification can be used. Fig 2 shows a camera 13 in proximity of the TBE 3, which can be used for identifying the ASP 50.

The TBE 3, as access gate entity (AGE), can comprise an AGE controller 5 as explained in the general part of the description, which preferably represents the main electronic component of the AGE 3. At least the components as explained in the general part of the description can be connected to the AGE controller 5. The AGE controller 5 can control these components and/or receive data from these components. The AGE controller 5 is preferably connected to the server 2 via the data link 4 for data exchange. This can be done wireless or by cable.

### List of reference signs

- 1: system
- 2: server
- 3: technical building equipment (TBE)
- 4: data-link
- 5: AGE controller
- 6: mobile ASP-device
- 7: test protocol unit
- 8: test protocol verification unit

- 10: wireless local Wi-Fi network
- 11: indoor positioning system (ultra wideband)
- 12: satellite navigation
- 13: camera
- 14: wireless local Bluetooth network
- 15: tag (NFC and/or QR)
- 16: reader

- 50: authorized service person (ASP)
- 51: access gate

- 100: method
- 101: performing a test
- 102: detecting presence
- 103: handing over presence information

## Claims

1. A method (100) for testing a technical building equipment, hereinafter referred to as TBE (3), and/or an access gate (51) of a building, the method comprising:
• performing (101) a test of the TBE (3) and/or the access gate (51) by an authorized service person, hereinafter referred to as ASP (50),
• detecting (102), by detecting means, presence of the ASP (50) in the proximity of the TBE (3) and/or access gate (51) by determining the position of a mobile ASP-device (6) to be carried by the ASP (50),
• handing over (103), in particular sending, a presence information to a test protocol verification unit (8)_{[AB|H&P1]}, when presence of the ASP (50) is detected in the proximity of the TBE (3) and/or access gate (51).

2. The method of claim 1, wherein the ASP generates a test protocol for the test by input at a test protocol unit (7).

3. The method of claim 2, wherein the test protocol unit (7) is implemented in the ASP-device (6), or wherein the test protocol unit (7) is server-implemented and operable via a user device, preferably the ASP-device (6).

4. The method of any preceding claim, wherein the test protocol is transferred to the test protocol verification unit (8).

5. The method of any preceding claim, wherein
• the test protocol verification unit (8) links the presence information to the test protocol, in particular in a tamper-proof manner,
• and/or the test protocol verification unit (8) provides the presence information with a time stamp, in particular in a tamper-proof manner,
• and/or the test protocol verification unit (8) links the presence information to a dataset, in particular in a tamper-proof manner, wherein the dataset is related to the performed test and/or the test protocol.

6. The method of any preceding claim, wherein the test protocol verification unit (8) is server-implemented and/or implemented in the ASP-device (6).

7. The method of any preceding claim, wherein
• the step(s) of detecting presence (102) and/or handing over the presence information (103) is/are performed automatically, when presence of the ASP (50) is detected in the proximity of the TBE (3) or the access gate (51) to be tested,
• or step(s) of detecting presence (102) and/or handing over the presence information (103) is/are triggered by the ASP (50) starting the test or generating the test protocol.

8. The method of any preceding claim, wherein, the position of the ASP-device (6) is determined:
• by checking if the ASP-device (6) is reachable within a wireless local network (10, 14), preferably reachable by a particular access point of the wireless local network (10, 14) and/or reachable with a certain RSSI-value,
• and/or by an indoor positioning system (11), preferably based on indoor-GPS, more preferably based on triangulation, more preferably based on ultra-wideband ranging,
• and/or by a satellite navigation system (12), such as GPS.

9. The method of any preceding claim, wherein the positon of the ASP-device (6) is determined:
• by reading a tag (15), preferably QR code or RFID chip, provided in the proximity of the TBE (3) or access gate (51) with the ASP-device (6), and handing over information corresponding to the tag as part of the presence information from the ASP-device (6) to the test protocol verification unit (8),
• and/or by recording the environment of the TBE (3) or access gate (51) with a camera of the ASP-device (6), whereby in the ASP-device (6) and/or in a server (2) the recorded environment is compared with stored data in order to identify the location, and handing over corresponding information as part of the presence information to the test protocol verification unit (8).

10. The method of any preceding claim, wherein the positon of the ASP-device (6) is determined:
• by reading the ASP-device (6) in the proximity of the TBE (3) or access gate (51) with a reader (16), and handing over information corresponding to the reader (16) and/or ASP-device (6) as part of the presence information from the reader (16) to the test protocol verification unit (8).

11. Method of any preceding claim, wherein the presence information contains information about the kind of the TBE (3), and/or the location of the TBE (3), and/or the identity of the ASP-device (6), and/or the time of presence of the ASP (50), and/or the identity of the ASP (50).

12. Method of any preceding claim, requiring that the ASP (50) identify herself/himself to the ASP-device (6) in order
• to add an information related to the identity of the ASP-device (6), and/or the time of presence of the ASP (50), and/or the identity of the ASP (50), to the presence information,
• and/or to permit the determination of the position of the ASP-device (6).

13. Method of any preceding claim, wherein the presence of two ASPs (50) is detected by the detecting means and the handed over presence information contains information about both present ASPs; in particular, wherein the position of two ASP-devices (6) is determined and/or the two ASPs (50) identify themselves at one ASP-device (6) which position is determined.

14. Method of any preceding claim, wherein the presence of the ASP (50) is detected (102) by identifying the ASP (50) at any TBE (3) of the building, in particular with biometrical identification.

15. System for carrying out the method of any preceding claim, comprising:
• the test protocol verification unit (8) adapted to receive the presence information,
• the TBE (3) and/or the access gate (51), adapted to be tested by the ASP (50),
• and the detecting means adapted to detect presence of the ASP (50) in the proximity of the TBE (3) and/or access gate (51) by determine the position of the mobile ASP-device (6) to be carried by the ASP (50),
• wherein the detecting means are adapted to hand over, preferably send, the presence information to the test protocol verification unit (8), when presence of the ASP (50) is detected in the proximity of the TBE (3) and/or access gate (51).
